**Europäisches Patentamt**

**European Patent Office**

**Office européen des brevets**

(11) Veröffentlichungsnummer : **0 072 393 B1**

# EUROPÄISCHE PATENTSCHRIFT

(45) Veröffentlichungstag der Patentschrift :
03.12.86

(51) Int. Cl.⁴ : **H 04 L 27/14, G 01 R 29/027**

(21) Anmeldenummer : **82104094.6**

(22) Anmeldetag : **12.05.82**

(54) Digitaler Frequenzdiskriminator.

(30) Priorität : **17.08.81 DE 3132377**

(43) Veröffentlichungstag der Anmeldung :
**23.02.83 Patentblatt 83/08**

(45) Bekanntmachung des Hinweises auf die Patenterteilung : **03.12.86 Patentblatt 86/49**

(84) Benannte Vertragsstaaten :
**AT BE CH DE LI NL**

(56) Entgegenhaltungen :
**DE-A- 2 030 220**
**DE-A- 2 153 228**
**US-A- 3 638 192**
**US-A- 3 790 881**

(73) Patentinhaber : **ANT Nachrichtentechnik GmbH**
**Gerberstrasse 33**
**D-7150 Backnang (DE)**

(72) Erfinder : **Steudle, Wilfried**
**Wiesentalstrasse 6**
**D-7432 Urach 1 (DE)**

(74) Vertreter : **Schickle, Gerhard, Dipl.-Ing. et al**
**ANT Nachrichtentechnik GmbH Patent- und Lizenzabteilung Gerberstrasse 33**
**D-7150 Backnang (DE)**

**Beschreibung**

Die Erfindung bezieht sich auf ein Verfahren zur Frequenzerkennung bzw. zur Erkennung eines über einen Nachrichtenkanal übertragenen Signals einer vorbestimmten Periode gemäß Oberbegriff der Patentansprüche 1 oder 2.

Solche Verfahren sind bekannt, beispielsweise aus der deutschen Patentschrift 20 30 220, die eine Schaltungsanordnung zum Empfang von aus Impulsreihen bestehenden Datensignalen, die mittels einer binären Trägerwelle übertragen sind, bei der den unterschiedlichen Zuständen der Datenimpulse unterschiedliche Frequenzen der binären Trägerwelle zugeordnet sind, wobei die Frequenzen der Trägerwelle und die Frequenzen der Datenimpulse in ganzzahligen Verhältnissen zu einer Taktfrequenz stehen, und bei der für Frequenzauswertungen aus der Serienschaltung von bistabilen Kippschaltungen bestehende, als digitale Filter wirksame Schieberegister vorgesehen sind, die unter der Einwirkung einer Steuerfrequenz jeweils durch jeden zugeordneten Impuls während seiner Periode durchlaufen werden, wobei für jede der binären Trägerfrequenzen ein durch ein aus der Taktfrequenz ganzzahlig abgeleitetes, der betreffenden Trägerfrequenz multipliziert mit der Kippstufenanzahl entsprechendes Steuersignal beaufschlagtes Schieberegister vorgesehen ist, dessen Eingangsklemmen mit dem Eingang der Empfangsanordnung verbunden sind und dessen Eingangs- und Ausgangssignale bei ihrer durch UND-Schaltungen festgestellten Koeffizienz ein das übertragende Datenzeichen integrierenden Tiefpaß zugeführt sind, dessen Ausgang entsprechend den durch das Schieberegister ausgewerteten Zustand der Datenimpulse direkt oder invertiert mit dem Ausgang der Empfangsanordnung verbunden ist. Diese Demodultorschaltung arbeitet nach dem Prinzip des n-stelligen Schieberegisters, das mit der n-fachen zu decodierenden Trägerfrequenz als Taktfrequenz geschoben wird und dessen Durchlaufzeit damit einer Periode des zu decodierenden Signals entspricht. Mit dieser Schaltungsanordnung ist es jedoch nicht möglich, ein durch den Übertragungskanal verzerrtes Nutzsignal zu erkennen, wenn die Verzerrungen bestimmte Werte überschreiten. Außerdem kann mit dieser Schaltung nicht zwischen Grund- und Oberwellen unterschieden werden.

Aufgabe der vorliegenden Erfindung war es deshalb, ein Verfahren der obigen Art anzugeben, mit dem eine Frequenzerkennung auch dann möglich ist, wenn Rauschen oder andere Einflüsse des Übertragungskanals die Null-Durchgänge der Signale zeitlich verlagern und somit eine Frequenzänderung vortäuschen. Das Verfahren soll dabei ohne großen Aufwand arbeiten.

Die Lösung erfolgt mit den in den Patentansprüchen angegebenen Mitteln.

Durch das erfindungsgemäße Verfahren wird mit geringem Bauelementeaufwand eine Frequenzerkennung ermöglicht, wobei Frequenz und deren Toleranzbreite einstellbar sind.

Es folgt nun die Beschreibung der Erfindung.

Bei der digitalen Frequenzbestimmung gibt es zwei Möglichkeiten, die Nulldurchgänge auszuwerten. Die erste Möglichkeit ist die, die Anzahl der Nulldurchgänge innerhalb eines Zeitintervalls zu zählen und eignet sich gut für hohe Frequenzen. Für Frequenzen in der Größenordnung 1 bis 3 kHz müsste dieses Zeitintervall groß gemacht werden, um eine gewisse Sicherheit zu erhalten. Das bedeutet aber eine lange Ansprechzeit.

Die zweite Möglichkeit sieht die Messung der Zeit zwischen den Nulldurchgängen vor. Bei idealen Sinus- oder Rechteckverläufen genügt eine halbe Periode um die Frequenz zu bestimmen. Nun ist jedoch der Sender nicht frei von Oberwellen, die auf dem Übertragungsweg anders bedämpft werden und auch eine andere Laufzeit haben als die Grundwelle. Durch Störsignalüberlagerung und dadurch, daß die empfangsseitige Umwandlung des Empfangssignals in Rechteck-Impulsfolgen mittels übersteuerung erfolgt, wobei der Komparator selten ohne Mittenablage ist, führen ebenfalls dazu, daß das Tast-(Puls-Pause-)Verhältnis vom idealen Wert 1 : 1 abgeht und beispielsweise Werte zwischen 4 : 6 und 6 : 4 annimmt.

Im allgemeinen sind die Abstände der Nulldurchgänge mit gleicher Polaritätswechselrichtung zeitgenauer, weshalb die Toleranzbreite bei Messung von Halbperioden größer als bei Messung der ganzen Perioden anzusetzen ist.

Eine genaue Methode ist es, ganze Vielfache x von Perioden t1 oder Halbperioden zu vermessen, indem die Durchlaufzeit des binären Datensignals der Wertigkeit 1 durch das Schieberegister diesem Vielfachen x angeglichen wird, wobei das empfangene Signal dann die vorbestimmte Periode t1 oder Halbperiode aufweist, wenn bei dem xten auf den 1. folgenden Nulldurchgang, der einen Polaritätswechsel gleicher Richtung bzw. gleicher oder umgekehrter Richtung aufweist, das binäre Datensignal der Wertigkeit 1 am Ausgang des Schieberegisters ansteht.

Störsignale erzeugen ebenfalls Nulldurchgänge in nicht vorhersagbaren zeitlichen Abständen. Um vor Fehlinterpretationen einer Messung sicher zu sein, die die Nutzfrequenz vortäuscht, jedoch von einem Störsignal herrührt, sind mehrere Nulldurchgänge entweder in ununterbrochener Reihenfolge oder mit Mehrheitsentscheidung zu vermessen.

Im folgenden wird die Erfindung anhand eines Ausführungsbeispiels, dargestellt in den Figuren, beschrieben.

Die Figur 1 zeigt das Blockschaltbild eines digitalen Frequenzdiskriminators, der nach dem erfindungsgemäßen Verfahren arbeitet.

Die Figur 2 zeigt einen ebensolchen Frequenzdiskriminator in einer detaillierteren Schaltungsanordnung.

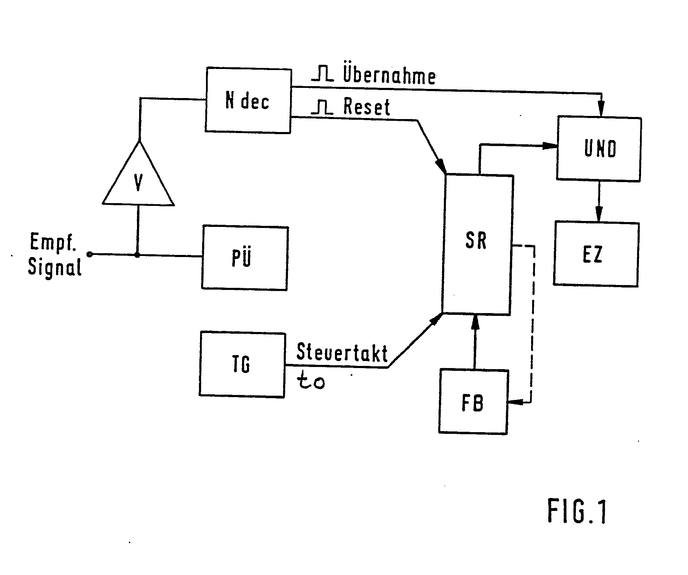

In der Fig. 1 wird das Empfangssignal einem übersteuernden Verstärker V und einer Pegelüberwachung PÜ zugeführt. Die Schaltung arbeitet nur ab einem bestimmten Empfangspegel. Durch den Verstärker V wird das Empfangssignal in ein Rechtecksignal umgewandelt, dessen Nulldurchgänge durch den Nulldurchgangsdecoder Ndec decodiert und beispielsweise mittels Differentiation zur Erzeugung von kurzen Impulsen benutzt werden. Durch jeden Nulldurchgang werden zwei zeitlich versetzte Impulse erzeugt, wobei der erstere, der Übernahmeimpuls, die vorhergegangene Messung beendet und veranlaßt, das Ergebnis zur Auswertung zu übernehmen. Der zweite, zeitlich etwas verzögerte Impuls (Rücksetzimpuls) setzt den Diskriminator zurück und startet sie erneut. Durch den Resetimpuls wird das Schieberegister SR auf Null gelöscht. Danach wird im Eingang des Schieberegisters SR von der Fensterbreitenanordnung FB eine Anzahl a von binären Einsen, die der Fensterbreite entspricht, eingeschrieben. Anschließend werden binäre Nullen aufgefüllt. Das Schieberegister wird durch den Taktgenerator TG mit dem Takt t0 versorgt. Ist t1 die Periode der zu bestimmenden Frequenz, so ist die Anzahl der Takte pro Halbwelle n = t1/2 t0. Wird ein Tastverhältnis von 6 : 4 bzw. 4 : 6 erlaubt, also eine Toleranzbreite b = ± 20 %, so ergeben sich bei einer Signalfrequenz von 1 300 Hz und einer Taktfrequenz von 67,652 kHz die Anzahl der erlaubten Takte to pro Halbwelle n = 26 ± 5 und eine Fensterbreite von a = 10. Die Mindestlänge des Speicherregisters ergibt sich dann zu r = n — a/2 = 26 — 5 = 21. Wird innerhalb des Zeitfensters, d. h. währenddessen, wenn die binären Einsen in den Augang des Schieberegisters geschoben werden, ein Nulldurchgang registriert und ein entsprechender Übernahmeimpuls erzeugt, so wird ein nachfolgendes UND-Glied dem Ereigniszähler EZ ein positives Ereignis melden.

In einer Ausgestaltung der Erfindung ist das Schieberegister auf eine Länge von 1 bis 64 Bit einstellbar und kann damit zur Erkennung von verschiedenen Frequenzwerten benutzt werden. Die Fensterbreite kann mit einem Zähler eingestellt werden, es kann dazu jedoch auch das Schieberegister selbst benutzt werden, indem, wie es in der Fig. 1 gestrichelt angedeutet, einer der beispielsweise 64 Parallelausgänge des Schieberegisters dazu benutzt wird, die Gruppe der binären Einsen abzuschließen, wenn deren Frontbit an seinem Ausgang gelangt ist.

In einer anderen Ausgestaltung der Erfindung wird die Frequenzerkennung nur dann aktiv geschaltet, wenn genügend Empfangspegel vorhanden ist. Die Ansprechzeit vergrößert sich dabei zwar um etwa 0,5 msec, diese Zeit ist jedoch relativ gering gegenüber der Zeit für die Frequenzerkennung. Die Störsicherheit ist jedoch wesentlich größer, da hier die Wahrscheinlichkeit dafür, daß durch Rauschen ein Nutzsignal vorgetäuscht wird, wesentlich kleiner ist.

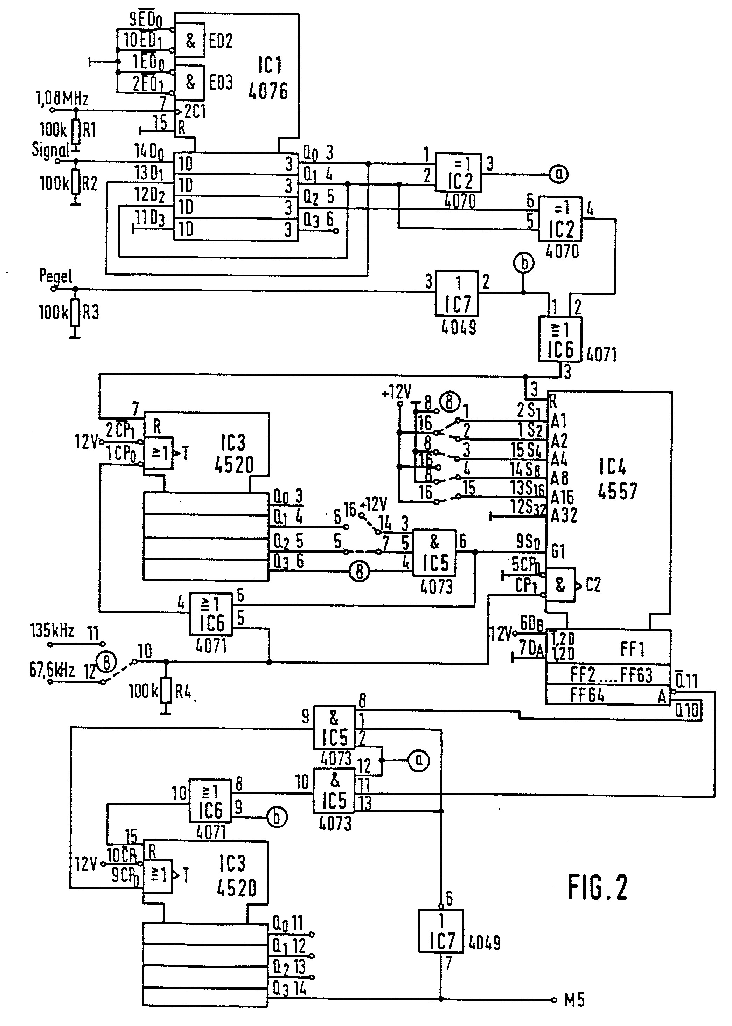

Die Fig. 2 zeigt eine Realisierungsmöglichkeit der Schaltung nach Fig. 1. Das Schieberegister ist dabei der integrierte Schaltkreis IC4 (4557/B). Mit dessen Steuereingängen a1, a2, a4, a8, a16 und a32 kann die Länge eingestellt werden, wobei die Länge des Schieberegisters um ein Flipflop größer ist als der Wert, der sich aus den Wertigkeiten der Steuereingänge ergibt. Mit dem Codiersockel 8 kann die zu bestimmende Frequenz durch Wahl der Taktfrequenz und Schieberegisterlänge, sowie die Toleranzbreite durch die Fensterbreite eingestellt werden.

Im folgenden soll die Funktionsweise dieser Schaltung kurz skizziert werden. Wechselt das Signal seine Polarität von 0 nach 1 oder umgekehrt, so erscheint dieser Wechsel mit der Taktfrequenz von 1,08 MHz synchronisiert an Q0 des Schaltkreises IC1. Q0 und Q1 haben nunmehr bis zum nächsten Takt verschiedene Werte. Damit wird an IC2/3 ein ebenso langer Übernahmeimpuls erzeugt. Einen Takt später haben Q1 und Q2 verschiedene Werte, so daß an IC2/4 ein kurzer Reset-Impuls erzeugt wird. Ist der Pegel auf Null, so sind IC3 und IC4 über IC7/2 und IC6/3 ständig zurückgesetzt, ist der Pegel auf 1, so werden sie nur mit dem Reset-Impuls zurückgesetzt. Bei Pegel 1 und nach dem Reset-Impuls ist IC5/6 auf Null. Damit wird der Zähler über IC6/4 und IC3/1 mit der eingestellten Taktfrequenz (67,6 bzw. 135 kHz) hochgezählt. Gleichzeitig wird mit demselben Takt in das Schieberegister eine Eins hineingeschoben. Je nach Codierung kippt IC5/6 nach 9, 11 oder 13 Takten auf eins. Damit kommen über IC6/4 keine Takte mehr zu IC3/1, d. h. der Zähler verharrt bis zum nächsten Reset in seiner Stellung. Mit dem Kippen von IC5/6 werden in das Schieberegister nur noch die Nullen eingeschoben. Nach einem Reset erscheint am Ausgang Q des Schieberegisters zunächst nur die Null. Entsprechend dem an den Eingängen des S1, S2, S4 und S8 liegenden Potentialen erscheinen nach 17 bis 32 Takten die erste hineingeschobene Eins und nach weiteren 9, 11 oder 13 Takten wieder nur die Null. Beim nächsten Flankenwechsel des Signals wird mit dem Übernahmeimpuls der Ausgang des Schieberegisters über IC5/9 auf IC3/9 gegeben, wenn M5 noch 0 ist. Ist der Ausgang Q auf 1, so entsteht eine Taktflanke und der Zähler wird um 1 erhöht, ist er auf Null, so entsteht kein Fehlimpuls, gleichzeitig wird jedoch in diesem Fall der Zähler über IC5/10 und IC6/10 zurückgesetzt.

Erreicht dieser Zähler die Zählerstellung 8, d. h. sind 8 Übernahmeimpulse im richtigen Zeitabstand eingelaufen, so wird M5 gesetzt. Gleichzeitig kann dann über IC5/10 kein Reset mehr erfolgen und über IC5/9 kann kein weiterer Zählimpuls mehr erzeugt werden. Der Zähler bleibt also stehen, bis er wegen eines Pegelabfalls über IC7/2 und IC6/10 zurückgesetzt wird. In den gezeichneten Schalterstellungen ist die Frequenzerkennun auf 1 300 Hz eingestellt. Selbstverständlich können jedoch mit Hilfe der Brücken im Codiersockel viele Frequenzen in einem weiten Bereich eingestellt werden.

Ein weiterer Vorteil der Erfindung liegt darin, daß mit einer einzigen Taktfrequenz mit Hilfe der einstellbaren Schieberegister und Fensterbreite und durch den Wegfall der einschränkenden Forderung, daß die Taktfrequenz ein ganzzahliges Vielfaches der Signalfrequenz zu sein hat, viele Frequenzbänder mit unterschiedlichen Bandbreiten diskriminiert werden können.

**Patentansprüche**

1. Verfahren zur Erkennung eines über einen Nachrichtenkanal übertragenen Signals einer vorbestimmten Periode t1 mit der Toleranzbreite $\pm$ b, wobei das Signal mittels übersteuernder Verstärkung (V) in ein Rechteck-ähnliches Signal umgewandelt wird, mit aus der Serienschaltung von r bistabilen Kippschaltungen bestehendem Schieberegister (SR), dessen Inhalt unter der Einwirkung eines Steuertaktes der Periode t0 verschoben wird, dadurch gekennzeichnet, daß bei einem ersten Nulldurchgang des Signals der Inhalt des Schieberegisters (SR) gelöscht wird, d. h. ein binäres Datensignal der Wertigkeit 0 annimmt, daß dann das binäre Datensignal mit der Wertigkeit 1 mittels einer bestimmbaren Anzahl a (Fensterbreite) von Steuertaktperioden t0 und anschließend bis zu einem zweiten Nulldurchgang des Signals wieder das binäre Datensignal mit der Wertigkeit 0 in das Schieberegister (SR) geschoben werden und daß das empfangene Signal dann die vorbestimmte Periode t1 bzw. Halbperiode aufweist, welche gleich der Durchlaufzeit des binären Datensignals mit der Wertigkeit 1 durch das Schieberegister ist, wenn beim zweiten Nulldurchgang am Ausgang des Schieberegisters (SR) das binäre Datensignal mit der Wertigkeit 1 ansteht und wenn der zweite Nulldurchgang der dem ersten Nulldurchgang folgende mit einem Polaritätswechsel gleicher bzw. umgekehrter Richtung ist, und daß das empfangene Signal dann als erkannt gilt, wenn es eine bestimmte Anzahl dieser Perioden bzw. Halbperioden aufweist.

2. Verfahren zur Erkennung eines über einen Nachrichtenkanal übertragenen Signals einer vorbetimmten Periode t1 mit der Toleranzbreite $\pm$ b, wobei das Signal mittels übersteuernder Verstärkung (V) in ein Rechteck-ähnliches Signal umgewandelt wird, mit aus der Serienschaltung von r bistabilen Kippschaltungen bestehendem Schieberegister (SR), dessen Inhalt unter der Einwirkung eines Steuertaktes der Periode t0 verschoben wird, dadurch gekennzeichnet, daß bei einem ersten Nulldurchgang des empfangenen Signals der Inhalt des Schieberegisters (SR) ein binäres Datensignal der Wertigkeit 0 annimmt, daß dann das binäre Datensignal der Wertigkeit 1 während einer bestimmten Anzahl a (Fensterbreite) von Steuertaktperioden t0 und danach wieder das binäre Datensignal der Wertigkeit 0 in das Schieberegister (SR) eingeschrieben werden und daß das empfangene Signal dann die vorbestimmte Periode t1 bzw. Halbperiode aufweist, deren Vielfache x gleich der Durchlaufzeit des binären Datensignals der Wertigkeit 1 durch das Schieberegister ist, wenn bei dem xten auf den ersten folgenden Nulldurchgang, der einen Polaritätswechsel gleicher bzw. umgekehrter Richtung aufweist, am Ausgang des Schieberegisters (SR) das binäre Datensignal der Wertigkeit 1 anstent, und daß das empfangene Signal dann als erkannt gilt, wenn es mit einer bestimmten Häufigkeit die vorbestimmte Periode bzw. Halbperiode aufweist.

3. Verfahren nach einem der Ansprüche 1 oder 2, dadurch gekennzeichnet, daß die Fensterbreite a sich aus der Toleranzbreite b und aus der Gesamtanzahl n der Steuertaktperioden t0 in der Periode t1 des Signals ergibt mit a = 2 bn + 1 mit n = t1/t0, wobei a und n auf ganze Zahlen zu runden sind.

4. Verfahren nach Anspruch 3, dadurch gekennzeichnet, daß das Schieberegister (SR) auf eine bestimmte Länge r = n — a/2 einstellbar ist, wobei r auf eine ganze Zahl zu runden ist.

5. Verfahren nach einem der vorhergehenden Ansprüche, dadurch gekennzeichnet, daß das empfangene Signal einen bestimmten Pegel überschreitet.

**Claims**

1. Method for the recognition of a signal, transmitted by way of a communications channel, of a predetermined period t1 with the tolerance width $\pm$ b, wherein the signal is converted by means of overloading amplification (V) into a rectangle-like signal, with a shift register (SR), which consists of the series connection of r bistable relaxation oscillators and the content of which is shifted under the effect of a control pulse of the period t0, characterised thereby, that the content of the shift register (SR) is cleared, i. e. assumes a binary data signal of the valency 0, on a first zero transition of the signal, that the binary data signal of the valency 1 is then put into the shift register (SR) by means of a determinable number a (window width) of control pulse periods t0 and, subsequently until a second zero transition of the signal, the binary data signal of the valency 0 is again put into the shift register (SR) and that the received signal displays the predetermined period t1 or half period, which is equal to the transit time of the binary data signal of the valency 1 through the shift register (SR), when the binary data signal of the valency 1 is present at the output of the shift register (SR) during the second zero transition and when the second zero transition is the one following the first zero transition with a polarity change of like or opposite direction and that the received signal counts as recognised when it displays a certain number of these periods or half periods.

2. Method for the recognition of a signal, transmitted by way of a communications channel, of a predetermined period t1 with the tolerance width $\pm$ b, wherein the signal is converted by means of overloading amplification (V) into a rectangle-like signal, with a shift register (SR), which consists of the series connection of r bistable relaxation oscillators and the content of which is shifted under the effect of a control pulse of the period t0, characterised thereby, that the content of the shift register (SR) assumes a binary data signal of the valency 0 on a first zero transition of the received signal, that the binary data signal of the valency 1 is then put into the shift register (SR) during a certain number a (window width) of control pulse periods t0 and thereafter the binary data signal of the valency 0 is again put into the shift register (SR) and that the received signal displays the predetermined period t1 or half period, the multiple x of which is equal to the transit time of the binary data signal of the valency 1 through the shift register (SR), when the binary data signal of the valency 1 is present at the ouptut of the shift register (SR) during the xth zero transition following upon the first zero transition, which displays a polarity change of like or opposite direction and that the received signal counts as recognised when it displays the predetermined period or half period with a certain frequency.

3. Method according to one of the claims 1 or 2, characterised thereby, that the window width a results from the tolerance width b and from the total number n of the control pulse periods t0 in the period t1 of the signal by a = 2 bn + 1 with n + t1/t0, wherein a and n are to be rounded off to whole numbers.

4. Method according to claim 3, characterised thereby, that the shift register (SR) is settable to a certain length r = n — a/2, wherein r is to be rounded off to a whole number.

5. Method according to one of the preceding claims, characterised thereby, that the received signal exceeds a certain level.

**Revendications**

1. Procédé d'identification d'un signal transmis par un canal d'une période t1 préalablement déterminée, avec la largeur de tolérance ± b, le signal étant transformé, par le moyen d'une amplification surmodulante (V) en un signal analogue à un signal rectangulaire, à l'aide d'un registre à décalage (SR) se composant du montage en série de r multivibrateurs bistables, registre à décalage dont le contenu est déplacé sous l'action d'une impulsion d'horloge de commande de la période t0, caractérisé en ce que, pour un premier passage par zéro du signal, le contenu du registre à décalage (SR) est éteint, c'est-à-dire reçoit un signal de donnée binaire de valeur significative 0, en ce qu'ensuite le signal de donnée binaire est passé dans le registre à décalage (SR) à la valeur significative 1, à l'aide d'un nombre pouvant être déterminé a (largeur de fenêtre) de périodes d'impulsions d'horloge de commande t0 et qu'ensuite, jusqu'a un second passage par zéro du signal, le signal de donnée binaire, à la valeur significative 0, est passé à nouveau dans le registre à décalage (SR), en ce que le signal reçu a alors la période préalablement déterminée t1 ou demi-période qui est égale au temps de passage du signal de donnée binaire à la valeur significative 1 par le registre à décalage, lorsque, lors du second passage par zéro, à la sortie du registre à décalage (SR) se présente le signal de donnée binaire à la valeur significative 1 et lorsque le second passage par zéro est celui qui suit le premier passage par zéro, avec un changement de polarité de même sens ou de sens inverse, et en ce que le signal reçu vaut pour identifié s'il présente un nombre déterminé de ces périodes ou demi-périodes.

2. Procédé d'identification d'un signal transmis par un canal, d'une période t1 préalablement déterminée, avec la largeur de tolérance ± b, le signal étant transformé, par le moyen d'une amplification surmodulante (V) en un signal analogue à un signal rectangulaire, à l'aide d'un registre à décalage (SR) se composant du montage en série de multivibrateurs bistables ; registre à décalage dont le contenu est déplacé sous l'action d'une impulsion d'horloge de commande de la période t0, caractérisé en ce que, pour un premier passage par zéro du signal reçu, le contenu du registre à décalage (SR) reçoit un signal de donnée binaire de la valeur significative 0, en ce qu'ensuite, le signal de donnée binaire de la valeur significative 1 est enregistré dans le registre à décalage (SR) pendant un nombre déterminé a (largeur de fenêtre) de périodes d'impulsions d'horloge de commande t0 et qu'ensuite, à nouveau, le signal de donnée binaire de la valeur significative 0 est enregistré dans le registre·à décalage (SR), en ce que le signal reçu a alors la période préalablement déterminée t1 ou la demi-période dont le multiple x est égal au temps de passage du signal de donnée binaire de la valeur significative 1 par le registre à décalage, lorsque lors du xème passage par zéro suivant le premier, qui présente un changement de polarité de même sens ou de sens inverse, à la sortie du registre à décalage (SR) se présente le signal de donnée binaire de la valeur significative et en ce que le signal reçu vaut pour identifié s'il présente, à une fréquence déterminée, la période préalablement déterminée ou la demi-période.

3. Procédé suivant l'une ou l'autre des revendications 1 et 2, caractérisé en ce que la largeur de fenêtre a résulte de la largeur de tolérance b et du nombre total n des périodes d'impulsions d'horloge de commande t0 pour la période t1 du signal, a étant égal à 2 bn + 1 et n étant égal à t1/t0, a et n étant à arrondir à des nombres entiers.

4. Procédé suivant la revendication 3, caractérisé en ce que le registre à décalage (SR) est réglable à une longueur déterminée r = n — a/2, r étant à arrondir à un nombre entier.

5. Procédé suivant l'une quelconque des revendications précédentes, caractérisé en ce que le signal reçu dépasse un niveau déterminé.

FIG.1

FIG.2